# EUROPEAN PATENT APPLICATION

(11) **EP 4 588 802 A1**
(43) Date of publication of application: **23.07.2025**
(21) Application number: 25152587.9
(22) Date of filing: 17.01.2025
(51) Int. Cl.: B64D 11/06, A47B 3/14, A47B 5/00, A47C 7/70, B60N 3/00, B60N 3/04

(54) **ACTUATED MEAL TABLE FOR FIRST AND BUSINESS CLASS CABINS**

(30) Priority: 18.01.2024 IN 202411003609; 26.11.2024 US 202418960763
(71) Applicant: B/E Aerospace, Inc., Winston-Salem, NC 27105 (US)
(72) Inventor: KOKKALLA, Deepak Chandra, 500091 Hyderabad, TS (IN); KRISHNAMOORTHY, Shivaprasad, 500032 Hyderabad, Telangana (IN); SIVANANACHAPERUMAL, Ananthkumar, 500043 Hyderabad (IN)
(74) Representative: Dehns

(57) **Abstract**

A meal table assembly (116) including a frame assembly (132) defining an interior space (138), a meal table (118) movably coupled to the frame assembly, and a lift mechanism (140) configured to move the meal table between a stowed position in the interior space and a deployed position outside of the interior space. In embodiments, the meal table and the frame assembly interact via a cam assembly configured to coordinate vertical motion and rotation of the meal table relative to the frame assembly as the meal table moves between the stowed and deployed positions. In embodiments, the meal table assembly is part of a console (104) that may be part of a seating configuration (100), for instance a first or business class seating configuration.

## Description

### TECHNICAL FIELD AND BACKGROUND

The present invention relates generally to a meal table for first and business class cabins, and more particularly, to a console mountable meal table with coordinated lifting and rotational motion.

Meal tables are used in aircraft and other conveyances for dining and working. In first and business class cabins including side consoles, meal tables are typically mounted on a support arm configured to track along the console to position the meal table relative to the passenger seat. Tracking is typically separate from meal table rotation, resulting in assemblies that are complex, consume a significant amount of cabin space to implement, and do not allow for customizable height and angles. In addition, assemblies with separate tracking and rotational motions do not allow for one-touch deployment and stowing.

Therefore, what is needed is a meal table assembly that overcomes the disadvantages of conventional meal table solutions.

### BRIEF SUMMARY

According to one aspect, the inventive concepts according to the present invention are directed to a meal table assembly including a frame assembly defining an interior space, a meal table movably mounted to the frame assembly, and a lift mechanism coupled to the frame assembly and the meal table, the lift mechanism configured to move the meal table between a stowed position in which the meal table is positioned in the interior space, and a deployed position in which the meal table is positioned outside of the interior space.

In some embodiments, the meal table and the frame assembly are coupled via a cam assembly configured to coordinate vertical motion and rotation of the meal table relative to the frame assembly.

In some embodiments, the frame assembly includes upright frame members forming lateral sides of the frame assembly, and at least one transverse frame member connected to each of the upright frame members.

In some embodiments, the cam assembly includes a pair of guide tracks formed on an inboard side of each of the upright frame members, and cam followers attached to the bottom end of the meal table, each cam follower engaged to travel along the pair of guide tracks formed on the inboard side of one of the upright frame members, wherein the pair of guide tracks are configured to impart meal table rotation as the meal table approaches the deployed position.

In some embodiments, the pair of guide tracks include a first guide track that is linear and elongated, and a second guide track having a first portion that is linear, elongated, and parallel to the first guide track, and a second portion that curves toward an upper end of the first guide track such that as the cam follower raises and reaches the upper end of the first guide track, the second portion of the second guide track causes the cam follower to rotate the attached meal table toward horizontal.

In some embodiments, the lift mechanism includes a thread screw coupled to the frame assembly, a motor configured to rotate the thread screw, a driven nut threadably mounted on the thread screw, and a carriage attached to the driven nut and to a bottom end of the meal table. In use, rotating the thread screw in a first direction causes the driven nut and the carriage to raise relative to the frame assembly thereby moving the meal table toward the deployed position, and rotating the thread screw in a second direction opposite the first direction causes the driven nut and the carriage to lower relative to the frame assembly thereby moving the meal table toward the stowed position.

In some embodiments, the meal table includes a first portion and a second portion angled relative to the first position, wherein the second portion forms part of a console in which the meal table assembly is mounted.

According to another aspect, the inventive concepts according to the present invention are directed to a console assembly including a console having a top, an inboard side, and an interior space, a frame assembly positioned in the interior space, a a meal table movably mounted to the frame assembly, and a lift mechanism coupled to the frame assembly and the meal table, the lift mechanism configured to move the meal table between a stowed position in which the meal table is positioned in the interior space, and a deployed position in which the meal table is positioned outside of the interior space.

According to a further aspect, the inventive concepts according to the present invention are directed to a seating configuration including a passenger seat, a console positioned to one side of the passenger seat, the console including a top, an inboard side, and an interior space, and a meal table assembly associated with the console. In embodiments, the meal table assembly includes a frame assembly positioned in the interior space, a meal table movably mounted to the frame assembly, and a lift mechanism coupled to the frame assembly and the meal table, the lift mechanism configured to move the meal table between a stowed position in which the meal table is positioned in the interior space, and a deployed position in which the meal table is positioned outside of the interior space and over the passenger seat.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a perspective view of a seating configuration for an aircraft, in accordance with example embodiments of this invention;
FIG. 2 is a perspective of a portion of the console, in accordance with example embodiments of this invention;
FIG. 3 is an isometric view of a meal table assembly, in accordance with example embodiments of this invention;
FIGS. 4A-4D are sequential views showing meal table deployment, in accordance with example embodiments of this invention; and
FIGS. 5A-5C are schematic illustration of the cam assembly for coordinating lift and rotation motion of the meal table, in accordance with example embodiments of this invention.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant invention. The inventive concepts disclosed herein are capable of other embodiments or of being practiced or carried out in various ways. Also, it is to be understood that the phraseology and terminology employed herein is for the purpose of description and should not be regarded as limiting. The scope of the invention is defined by and only limited by the claims.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein are directed to a meal table assembly for console mounting in a passenger cabin, for instance a first or business class passenger cabin in an aircraft. In embodiments, the meal table is capable of one-touch deployment and stowing, and includes a lift mechanism that works in conjunction with a cam assembly to lift the meal table and impart rotation as the meal table nears its fully deployed position. Benefits of the meal table assembly according to the present invention include, but are not limited to, one-touch operation, durable materials for enhanced longevity, efficient use of cabin space, comfort, reliability, customizable height and angle adjustments, and enhanced aesthetic appeal and luxury experience.

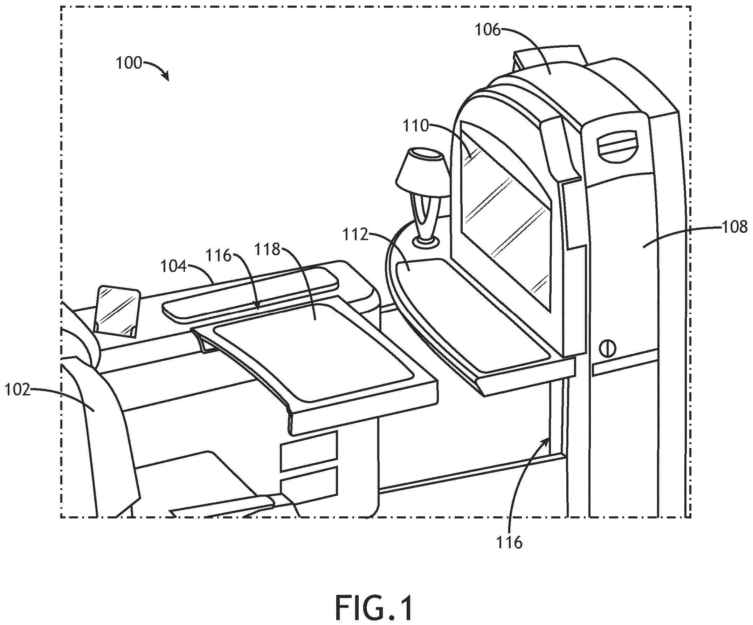

FIG. 1 illustrates a non-limiting example of a seating configuration 100 for first or business class in an aircraft. The seating configuration 100 includes a passenger seat 102, a console 104 positioned to one side of the passenger seat 102, and a monument 106 positioned directly forward of the passenger seat 102. The monument 106 may include a closet 108, may serve as a mounting location for a video monitor 110, and may include a desk 112. The passenger seat 102 may be a highly-adjustable seat, and in some instance may be transition between upright for taxi, takeoff, and landing (TTOL) and lie-flat during flight. A footwell 114 may be positioned under the desk 112.

The console 104 is positioned to one side of the passenger seat 102, for instance against the fuselage wall in the case of a window seat, or against a privacy divider in the case of a center column seat. The console 104 houses a meal table assembly 116 including a meal table 118 shown fully deployed to a substantially horizontal position overlying the passenger seat 102.

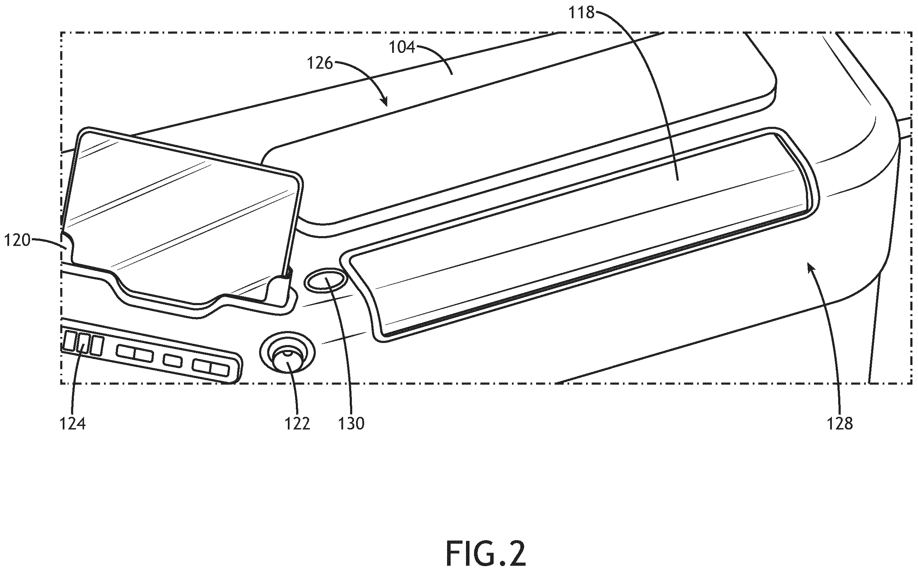

FIG. 2 illustrates the console 104. In embodiments, the console 104 may include features such as a portable electronic device holder 120, a passenger controlled air vent such as an eyeball gasper 122, and a control panel 124 for at least one of media, seat and climate control. The meal table 118 is shown fully stowed. In embodiments, the console 104 includes a top 126 and inboard side 128 (e.g., facing the passenger seat), and the console 104 forms an interior space for stowing the meal table 118. One end of the meal table 118 may form part of the console top 126 and inboard side 128 when the meal table is fully stowed to provide a finished look. An electrical switch 130 for one-touch operation of the meal table assembly 116 may be positioned alongside the meal table 118 for convenient access and operation.

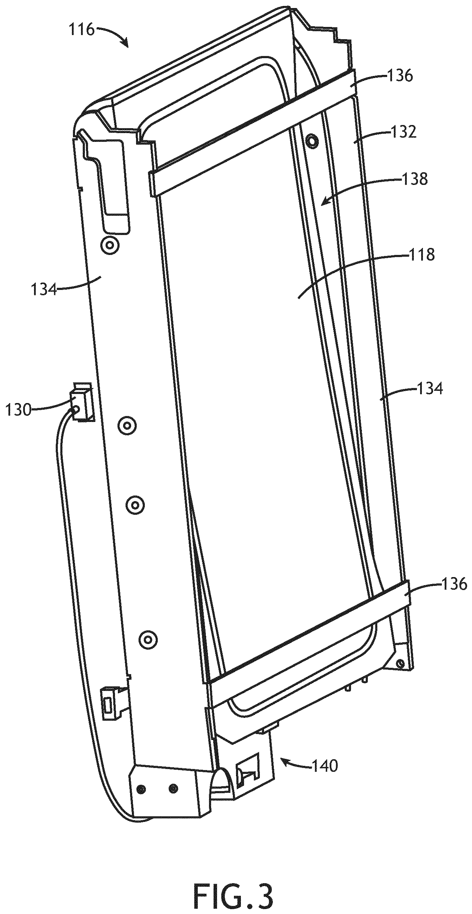

FIG. 3 illustrates the meal table assembly 116 from the outboard side and shown removed from the console. The meal table assembly 116 generally includes a frame assembly 132 and the meal table 118 movably mounted to the frame assembly 132. In embodiments, the frame assembly 132 includes upright (e.g., vertical) frame members 134, and at least one transverse (e.g., horizontal) frame member 136 attached to the upright frame members 134. The frame assembly 132 defines an interior space 138. When fully stowed, the meal table 118 is positioned within the interior space as shown in FIG. 3. When fully deployed, the meal table 118 is positioned outside of the interior space as shown in FIG. 1. When installed in the console, the frame assembly 132 may be tilted toward the inboard side of the console such that the behavior of the meal table 118 when lifted is to want to rotate toward horizontal over the passenger seat (e.g., tendency to want to deploy or fall in the correct direction). The meal table assembly 116 further includes a lift mechanism 140 including a motor wired to the switch 130, as discussed below.

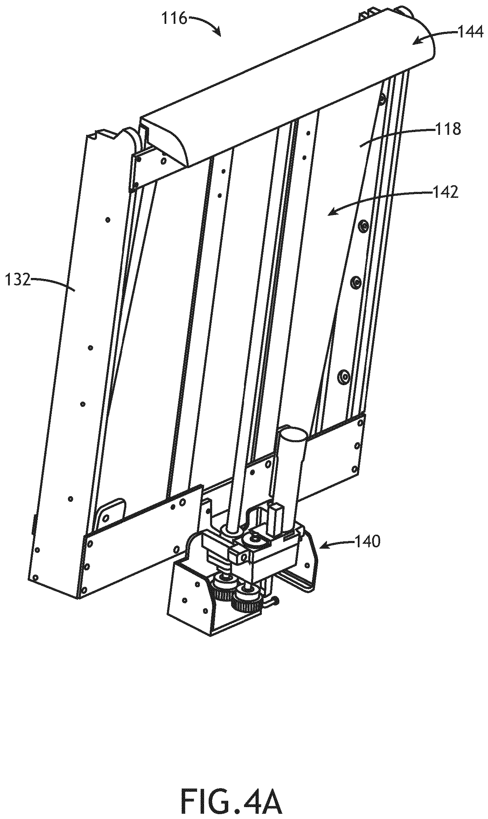

FIGS. 4A-4D illustrate the deployment sequence of the meal table 118 shown from the inboard side of the meal table assembly 116. The frame assembly 132 is configured to be installed in a fixed position in the interior space of the console. As discussed above, the frame assembly 132 may be tiled toward the inboard side. FIG. 4A shows the meal table 118 fully stowed in the interior space formed by the frame assembly 132. In embodiments, the meal table 118 includes a first portion 142 that includes the tabletop, and a second portion 144 attached to the outboard lateral side of the first portion 142 forming part of the console.

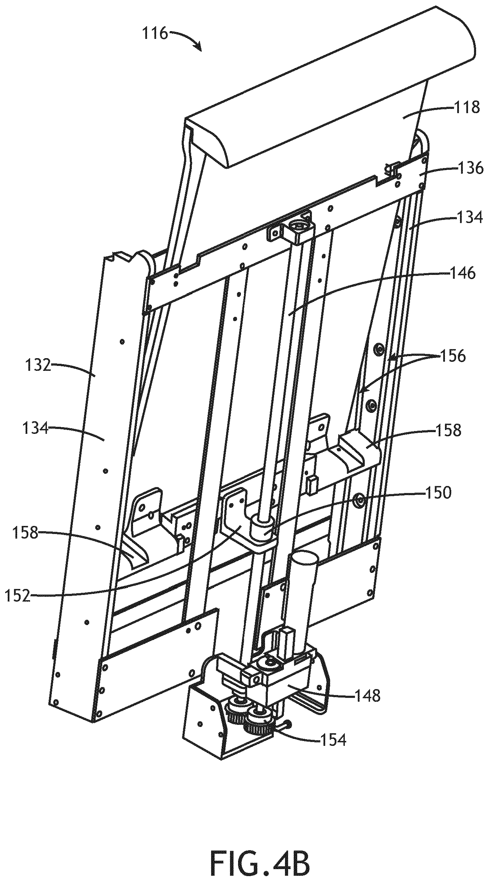

FIG. 4B illustrates the lift mechanism 140. In use, the lift mechanism 140 is coupled to the frame assembly 132 and to the meal table 118, and the lift mechanism 140 is configured to move the meal table 118 between the stowed position in which the meal table is positioned in the interior space, and a deployed position in which the meal table 118 is positioned outside of the interior space. In embodiments, the lift mechanism 140 includes a thread screw 146 coupled to the frame assembly 132, a motor 148 configured to rotate the thread screw 146, a driven nut 150 threadably mounted on the thread screw 146, and a carriage 152 attached to the driven nut 150 and to a bottom end of the meal table 118. In some embodiments, gears 154 coupled to the motor shaft and to the thread screw 146 may include a drive gear and a meshed driven gear.

In use, rotating the thread screw 146 in a first direction (e.g., clockwise) causes the driven nut 150 and the attached carriage 152 to 'raise' relative to the frame assembly 132 thereby moving the meal table 118 upward toward the deployed position, while rotating the thread screw 146 in a second direction opposite the first direction (e.g., counterclockwise) causes the driven nut 150 and the attached carriage 152 to 'lower' relative to the frame assembly 132 thereby moving the meal table 118 toward the stowed position. In embodiments, the carriage 152 attaches to a bracket mounted to the bottom of the meal table 118, and the upper end of the thread screw 146 is coupled to the frame assembly 132, for instance centered along the length of the frame assembly 132 and attached to an upper transverse frame member 136.

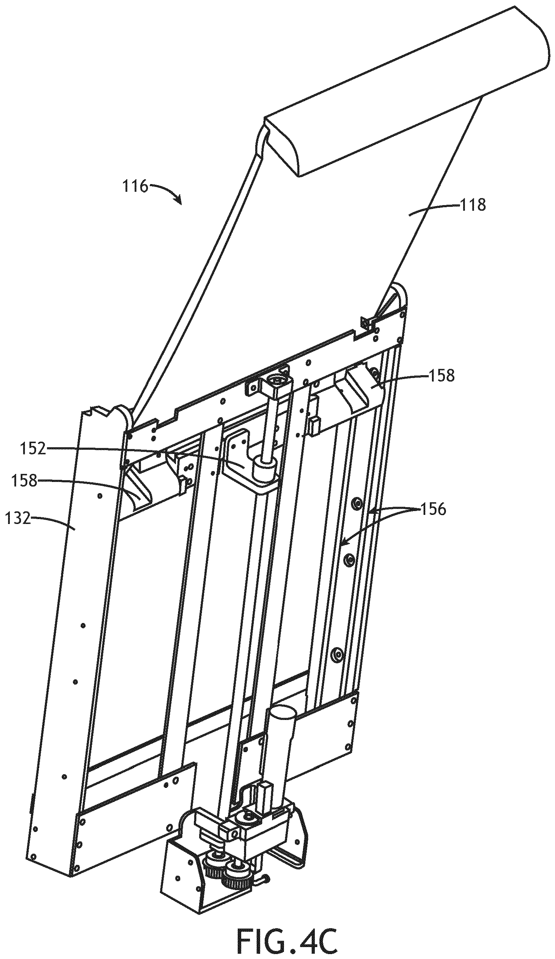

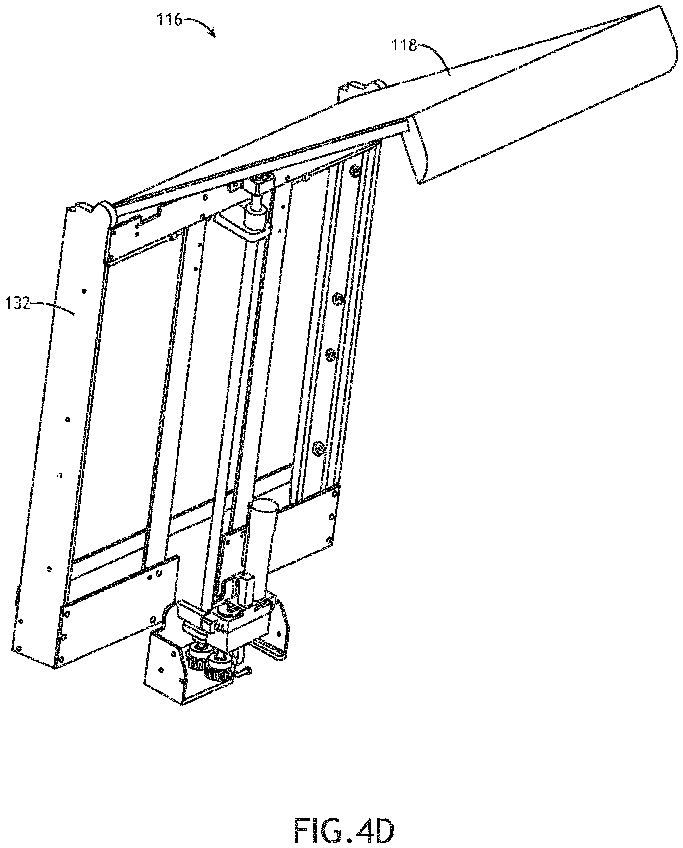

The meal table 118 and the frame assembly 132 interact through a cam assembly. In use, the cam assembly operates to coordinate lifting motion and meal table rotation. More specifically, from the fully stowed position shown in FIG. 4A to a first intermediate position shown in FIG. 4B, the lifting motion is primarily linear motion. As the bottom of the meal table 118 approaches the top of the frame assembly 132 as shown in FIG. 4C, the motion transitions to rotational motion. As the motion continues as shown in FIG. 4D, the motion is primarily rotational motion. In other words, rotational motion is imparted by the cam assembly as the meal table 118 nears the deployed position and as the meal table first retreats from the deployed position.

With continued reference to FIG. 4B, the cam assembly includes a pair of guide tracks 156 formed on an inboard side of each of the upright frame members 134, and in a symmetrical arrangement. Cam followers 158 are mounted to the left and right sides of the bottom of the meal table 118 and are engaged to travel along their respective pair of guide tracks 156. In embodiments, the meal table 118 interacts with the frame assembly through the cam followers 158 and the rest of the meal table 118 may be detached from the frame assembly 132.

With reference to FIGS. 4B and 4C, the cam followers 158 travel up and down their respective guide tracks 156 to raise and lower the table while maintain the meal table 118 substantially vertical. As the meal table 118 approaches the top of the frame assembly 132 as a result of the carriage 152 being driven upward, the cam assembly then causes the meal table 118 to rotate toward horizontal in the direction of the deployed position as shown in FIG. 4D, with the fully deployed position shown in FIG. 1.

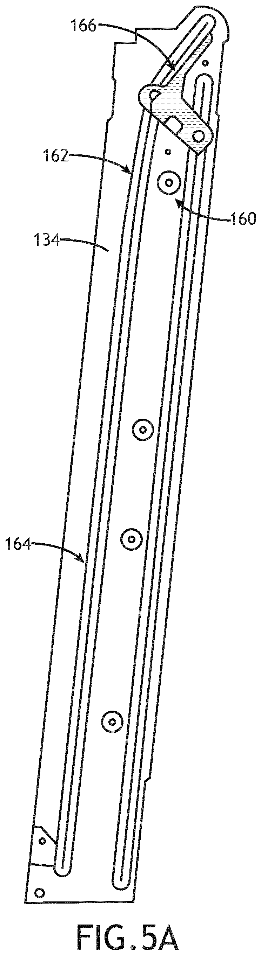

FIG. 5A-5C illustrate the pair of guide tracks 156 of each of the upright frame members 134, and specifically, a first guide track 160 and a second guide track 162 forming a pair of guide tracks. In embodiments, the first guide track 160 is elongated and linear or substantially linear, and the second guide track 162 has a first portion 164 that is linear, elongated, and parallel to the first guide track 160, and a second portion 166 that curves toward an upper end of the first guide track 160 such that as the cam follower raises and reaches the upper end of the first guide track 160, the second portion 166 of the second guide track 162 causes the cam follower to rotate the attached meal table toward horizontal. In embodiments, the first portion 164 corresponds to the middle and lower portion of the second guide track 162, and the second portion 166 corresponds to the upper end of the second guide track 162.

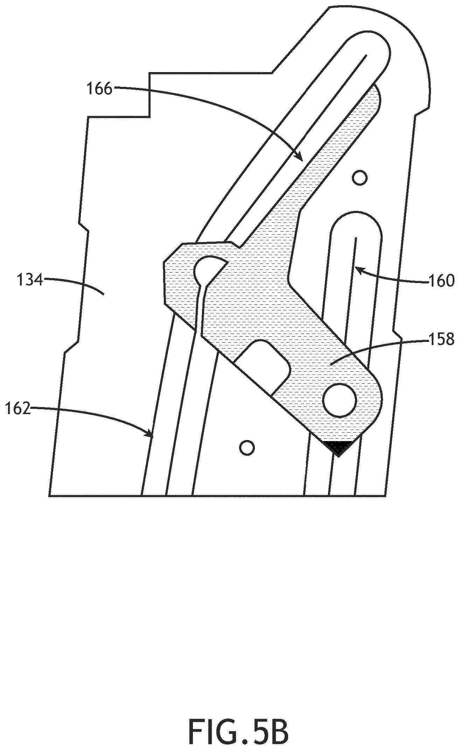

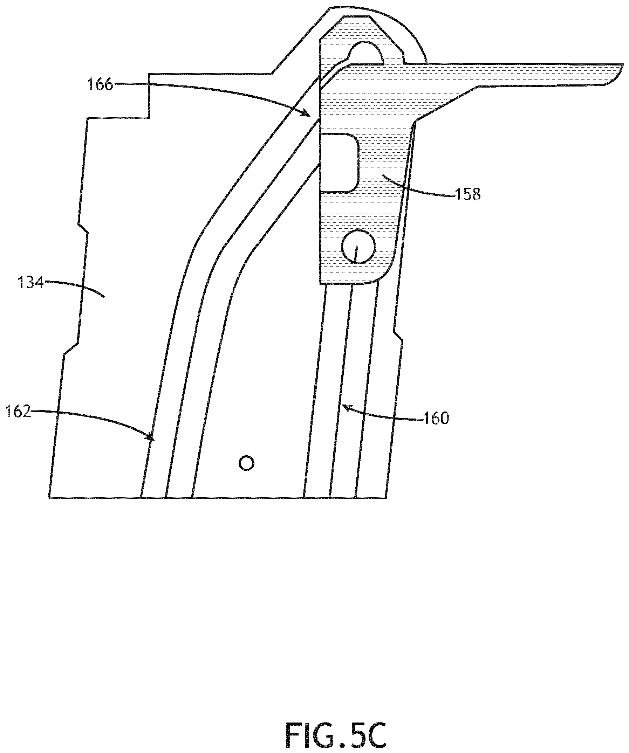

In use, the cam follower 158 travels up and down along the pair or guide tracks 160, 162. In embodiments, the cam follower 158 includes vertically oriented rollers to facilitate smooth travel. As the cam follower 158 nears the tops of the tracks 160, 162 as shown in FIG. 5B, the converging tracks cause the cam follower 150 to rotate (e.g., clockwise). When the cam follower 158 reaches the top of the first track 160 as shown in FIG. 5C, the cam follower 158 continues to travel along the second track 162 thereby causing the attached meal table to rotate toward horizontal. The top end of the second track 162 is positioned above the top end of the first track 160, and the length of the second track 162 is longer than the length of the first tracks 160, such that purely rotational motion occurs as the meal table nears the fully deployed position. In some embodiments, the meal table rotates about 90 degrees between the fully stowed and fully deployed positions, and more preferable slightly less than about 90 degrees considering the tilted starting position and horizontal end position.

In some embodiments, the meal table assembly may be further equipped with at least one sensor for detecting at least one object and or weight positioned on the meal table when in the deployed condition. The at least one sensor may be integrated into the meal table construction configured to sense weight on the weight table. The at least one sensor may be positioned separate from the at least one sensor and with the meal table in the field of view of the at least one sensor. Traditional sensors are known for detecting at least one of weight and/or objects.

In embodiments, when at least one object and/or weight is sensed on the meal table surface, the meal table may be prevented from operating to move the meal table to the stowed position. In other words, to prevent items from being spilled, dropped, shifted etc., or when weight is one the meal table that could overwhelm the motion mechanism (the passenger is resting on the meal table), the motion mechanism may be rendered inoperative. In embodiments, the meal table assembly may include a controller communicatively coupled to each of the at least one sensor and the motion mechanism. In use, the controller includes processing circuitry configured to receive at least one sensor output, determined from the at least one sensor output at least one object and/or load on the meal table, and render the motion mechanism operative or inoperative based on the determination of the present state of the meal table.

In embodiments, the controller is configured to receive, determine, instruct, execute, etc. The controller may include at least one processor, memory, and a communication interface. The processor provides processing functionality for at least the controller and may include any number of processors, micro-controllers, circuitry, field programmable gate array (FPGA) or other processing systems, and resident or external memory for storing data, executable code, and other information accessed or generated by the controller. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the processor, such as software programs and/or code segments, or other data to instruct the processor, and possibly other components of the controller, to perform the functionality described herein. Thus, the memory can store data, such as a program of instructions for operating the controller, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the controller. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the controller and the processor. It should be noted that while the communication interface is described as a component of the controller, one or more components of the communication interface may be implemented as external components communicatively coupled to the controller via a wired and/or wireless connection. The controller may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the invention as defined by the claims.

## Claims

1. A meal table assembly (116), comprising:
a frame assembly (132) defining an interior space (138);
a meal table (118) movably mounted to the frame assembly; and
a lift mechanism (140) coupled to the frame assembly and the meal table;
**characterized in that**:
the lift mechanism is configured to move the meal table between a stowed position in which the meal table is positioned in the interior space, and a deployed position in which the meal table is positioned outside of the interior space; and
the meal table and the frame assembly are coupled via a cam assembly configured to coordinate vertical motion and rotation of the meal table relative to the frame assembly as the meal table moves between the stowed position and the deployed position.

2. The meal table assembly (116) according to claim 1, wherein the frame assembly comprises:
upright frame members (134) forming lateral sides of the frame assembly; and
at least one transverse frame member (136) connected to each of the upright frame members.

3. The meal table assembly (116) according to claim 1 or 2, wherein the cam assembly comprises:
a pair of guide tracks (156) formed on an inboard side of each of the upright frame members; and
cam followers (158) attached to the bottom end of the meal table, each cam follower engaged to travel along the pair of guide tracks formed on the inboard side of one of the upright frame members;
wherein the pair of guide tracks are configured to impart meal table rotation as the meal table approaches the deployed position.

4. The meal table assembly (116) according to claim 3, wherein the pair of guide tracks comprises:
a first guide track (160) that is linear and elongated; and
a second guide track (162) having a first portion (164) that is linear, elongated, and parallel to the first guide track, and a second portion (166) that curves toward an upper end of the first guide track such that as the cam follower raises and reaches the upper end of the first guide track, the second portion of the second guide track causes the cam follower to rotate the attached meal table toward horizontal.

5. The meal table assembly (116) according to any preceding claim, wherein the lift mechanism comprises:
a thread screw (146) coupled to the frame assembly;
a motor (148) configured to rotate the thread screw;
a driven nut (150) threadably mounted on the thread screw; and
a carriage (152) attached to the driven nut and to a bottom end of the meal table;
wherein, in use, rotating the thread screw in a first direction causes the driven nut and the carriage to raise relative to the frame assembly thereby moving the meal table toward the deployed position, and rotating the thread screw in a second direction opposite the first direction causes the driven nut and the carriage to lower relative to the frame assembly thereby moving the meal table toward the stowed position.

6. The meal table assembly (116) according to any preceding claim, wherein the meal table comprises a first portion (142) and a second portion (144) angled relative to the first position, and wherein the second portion forms part of a console (104) in which the meal table assembly is mounted.

7. A seating configuration (100), comprising:
a passenger seat (102);
a console (104) positioned to one side of the passenger seat, the console including a top, an inboard side, and an interior space; and
a meal table assembly (116) disposed in the console, the meal table assembly comprising:
a frame assembly (132) positioned in the interior space;
a meal table (118) movably mounted to the frame assembly; and
a lift mechanism (140) coupled to the frame assembly and the meal table;
**characterized in that**:
the lift mechanism is configured to move the meal table between a stowed position in which the meal table is positioned in the interior space, and a deployed position in which the meal table is positioned outside of the interior space and overlying a portion of the passenger seat; and
the meal table and the frame assembly are coupled via a cam assembly configured to coordinate vertical motion and rotation of the meal table relative to the frame assembly as the meal table moves between the stowed position and the deployed position.

8. The seating configuration (100) according to claim 7, wherein the frame assembly comprises;
upright frame members (134) forming lateral sides of the frame assembly, the upright frame members tilted toward the inboard side of the console; and
at least one transverse frame member (136) connected to each of the upright frame members.

9. The seating configuration (100) according to claim 7 or 8, wherein the cam assembly comprises:
a pair of guide tracks (156) formed on an inboard side of each of the upright frame members; and
cam followers (158) attached to the bottom end of the meal table, each cam follower engaged to travel along the pair of guide tracks formed on the inboard side of one of the upright frame members;
wherein the pair of guide tracks are configured to impart meal table rotation as the meal table approaches the deployed position.

10. The seating configuration (100) according to claim 7, 8 or 9, wherein the lift mechanism comprises:
a thread screw (146) coupled to the frame assembly;
a motor (148) configured to rotate the thread screw;
a driven nut (150) threadably mounted on the thread screw; and
a carriage (152) attached to the driven nut and to a bottom end of the meal table;
wherein, in use, rotating the thread screw in a first direction causes the driven nut and the carriage to raise relative to the frame assembly thereby moving the meal table toward the deployed position, and rotating the thread screw in a second direction opposite the first direction causes the driven nut and the carriage to lower relative to the frame assembly thereby moving the meal table toward the stowed position.
